(19) Europäisches Patentamt
European Patent Office
Office européen des brevets

(11) EP 4 054 827 B1

(12) **EUROPÄISCHE PATENTSCHRIFT**

(45) Veröffentlichungstag und Bekanntmachung des Hinweises auf die Patenterteilung:
**10.01.2024 Patentblatt 2024/02**

(21) Anmeldenummer: **20807657.0**

(22) Anmeldetag: **06.11.2020**

(51) Internationale Patentklassifikation (IPC):
***B29C 64/135*** (2017.01) ***B29C 64/277*** (2017.01)
***B33Y 10/00*** (2015.01) ***B33Y 30/00*** (2015.01)

(52) Gemeinsame Patentklassifikation (CPC):
**B29C 64/135; B29C 64/277; B33Y 10/00; B33Y 30/00**

(86) Internationale Anmeldenummer:
**PCT/DE2020/100952**

(87) Internationale Veröffentlichungsnummer:
**WO 2021/089090 (14.05.2021 Gazette 2021/19)**

(54) **VERFAHREN UND VORRICHTUNG ZUM BEARBEITEN EINES OPTISCH REAKTIVEN MATERIALS**

METHOD AND APPARATUS FOR PROCESSING AN OPTICALLY REACTIVE MATERIAL

PROCÉDÉ ET APPAREIL DE TRAITEMENT D'UN MATÉRIAU OPTIQUEMENT RÉACTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2019 DE 102019129868**

(43) Veröffentlichungstag der Anmeldung:
**14.09.2022 Patentblatt 2022/37**

(73) Patentinhaber: **Xolo GmbH**
**12489 Berlin (DE)**

(72) Erfinder:
- **GARMSHAUSEN, Yves**
  **12621 Berlin (DE)**
- **REUTER, Marcus**
  **13593 Berlin (DE)**
- **REGEHLY, Martin**
  **12589 Berlin (DE)**
- **KÖNIG, Niklas**
  **12043 Berlin (DE)**

(74) Vertreter: **Hafner & Kohl PartmbB**
**Schleiermacherstraße 25**
**90491 Nürnberg (DE)**

(56) Entgegenhaltungen:
**WO-A1-2019/194798**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 054 827 B1

## Beschreibung

Die Erfindung betrifft ein Verfahren und eine Vorrichtung zum Bearbeiten eines optisch reaktiven Materials.

### Hintergrund

Ausgangsmaterialien können optisch bearbeitet werden, also mittels Einstrahlen von Licht einer oder mehrerer Wellenlängen auf das Ausgangsmaterial, um wenigstens eine Materialeigenschaft des Ausgangsmaterials hierdurch zu verändern. So ist es beispielsweise als solches bekannt, mit Hilfe einer solchen optischen Bearbeitung ein Ausgangsmaterial auszuhärten.

In dem Dokument US 4,041,476 sind ein Verfahren und eine Vorrichtung beschrieben, mit denen ein dreidimensionaler Körper aus einem Ausgangsmaterial hergestellt werden kann, indem Lichtstrahlen unterschiedlicher Wellenlänge auf das Ausgangsmaterial eingestrahlt werden und sich hierbei punktförmig überlappen.

Im Dokument US 2019 / 001 605 2 A1 sind ein Verfahren an einer Vorrichtung für ein additives Verfahren zum Herstellen dreidimensionaler Körper beschrieben. Hierbei ist vorgesehen, mehrere LCD-Display übereinander anzuordnen, um mit Hilfe der LCD-Displays ein dreidimensionales Bild auf ein auszuhärtendes Material abzubilden. Die LCD-Displays sind hierbei als Schichten ortsfest in einer gestapelten Anordnung positioniert. Auf diese Weise soll ein UV-härtbares Polymer bearbeitet werden.

Aus dem Dokument US 2019 / 0160539 A1 ist ein Verfahren zum Herstellen einer druckbaren 3D-Nanostruktur bekannt, umfassend: eine erste Lichtquelle, die eingerichtet ist, ein Polymermedium über ein dynamisches Licht-Raummodulationselement in einen angeregten Zustand zu bringen, um die Polymerisation zu initiieren; eine zweite Lichtquelle, die eingerichtet ist, das polymerisierte Medium selektiv mit Hemmungsenergie zu beaufschlagen, um die Polymerisation zu hemmen, wodurch unterhalb einer Wachstumszone eine Totzone erzeugt wird, die eine kontinuierliche 3D-Polymerisation ermöglicht.

Im Dokument US 2019 / 160539 A1 ist eine additive Fertigungsvorrichtung offenbart, die Folgendes aufweist: eine Plattform, einen Spender, der konfiguriert ist, mehrere aufeinanderfolgende Schichten eines Beschickungsmaterials auf die Plattform zu liefern, eine Lichtquellenanordnung zum Erzeugen eines ersten Lichtstrahls und einen zweiten Lichtstrahl, einen Strahlkombinierer, der konfiguriert ist, das erste Licht und das zweite Lichts in einem gemeinsamen Lichtstrahl zu kombinieren, und einen Spiegelscanner, der konfiguriert ist, den gemeinsamen Lichtstrahl auf die Plattform zu richten, um Energie entlang eines Abtastpfades auf einer äußersten Schicht des Beschickungsmaterials zu liefern.

Die Polymerisation ist eine Reaktion, die zum Herstellen von Kunststoffen genutzt wird. Bei der Fotopolymerisation, die eine Form der optischen Bearbeitung eines Ausgangsmaterials ist, wird die Reaktion mittels Einstrahlen von Licht auf das polymerisierbare Ausgangsmaterial ausgelöst. Solche polymerisierbaren Ausgangsstoffe oder -materialien werden auch als Fotopolymer bezeichnet. Hierbei handelt es sich um ein Polymer, das seine Materialeigenschaften ändert, wenn es mit Licht bestrahlt wird. Die Lichteinstrahlung bewirkt strukturelle Änderungen, beispielsweise die fotochemische Härtung des Materials durch Vernetzung. Die Fotopolymerisation wird beispielsweise beim 3D-Drucken genutzt, um mittels Lichteinstrahlung in dem polymerisierbaren Ausgangsmaterial dreidimensionale Formkörper aus dem ausgehärteten Material herzustellen.

Das Ausgangsmaterial selbst kann für das eingestrahlte Licht transparent und somit unempfindlich sein. Es werden Fotoinitiator-Moleküle beigemischt, welche das Licht absorbieren und die Aushärtung des Ausgangsmaterials initiieren. Für die Prozessierung des Ausgangsmaterials im unveränderten (freien) Volumen ist die Adressierung eines freigewählten Punktes im 3-dimensionalen Raum notwendig. Eine Möglichkeit ist die Verwendung von speziellen Fotoinitiatoren, die auch als Dual-Color-Fotoinitiatoren bezeichnet werden. Diese werden bevorzugt oder ausschließlich durch Absorption von Photonen zweier unterschiedlicher Wellenlängen angeregt. Dual-Color-Fotoinitiatoren können auf unterschiedlichen Wegen erzeugt werden, in einer Variante weisen Moleküle ohne Lichteinstrahlung einen Grund- / Normalzustand (A) auf. In diesem Zustand besitzt das Molekül eine Absorptionsbande für eine Wellenlänge $\lambda_1$ und eine möglichst geringe Absorption bei einer anderen Wellenlänge $\lambda_2$.

Die Moleküle können sodann einen voraktivierten oder angeregten Zwischenzustand (B) einnehmen. Der angeregte Zwischenzustand wird erzeugt durch Absorption von Licht der Wellenlänge $\lambda_1$ aus dem Grundzustand A. Die Fotoinitiator-Moleküle weisen eine Absorptionsbande für die Wellenlänge $\lambda_2$ auf. Die Absorptionsbande für die Wellenlänge $\lambda_1$ verschwindet. Alternativ bleibt die Absorptionsbande für die Wellenlänge $\lambda_1$ erhalten. Hierdurch entsteht ein unerwünschter, konkurrierender Übergangskanal zum Zustand C. Das Fotoinitiator-Molekül kehrt in Abwesenheit von Licht in den Zustand A zurück. Alternativ kehrt das Fotoinitiator-Molekül nach Anregung mit Licht einer dritten Wellenlänge $\lambda_3$ in den Zustand A zurück. Dies erlaubt eine gezielte Inhibition des Initiators im Zustand B.

Der aktive Zustand C der Moleküle wird durch Absorption der Wellenlänge $\lambda_2$ aus B erzeugt. Der Zustand C setzt eine chemische und / oder eine physikalische Modifikation der unmittelbaren Umgebung des Moleküls in Gang. Eine Rückreaktion zu B ist nicht vorgesehen aber möglich.

Das Dokument WO 2019 / 194 798 A1 offenbart eine Vorrichtung und ein Verfahren zur Bildung einer dreidimensionalen Komponente. Das Verfahren umfasst ein Füllen eines Behälters mit einem Volumen von härtbarem Harz, wobei das Harz dazu eingerichtet ist, eine erste Reaktion zu durchlaufen, um ein erstes Produkt zu bilden, wenn es einem Licht einer ersten Wellenlänge ausgesetzt ist, und eine zweite Reaktion zu durchlaufen, um ein zweites Produkt zu bilden, wenn es einem Licht einer zweiten Wellenlänge ausgesetzt ist. Das Vorhandensein des ersten und zweiten Produkts an einer gemeinsamen Stelle im Harz löst eine dritte Reaktion aus, die in einem festen Polymer an der gemeinsamen Stelle resultiert. Das Verfahren beinhaltet ferner ein Lenken einer ersten Lichtquelle der ersten Wellenlänge in den Behälter, ein Lenken einer zweiten Lichtquelle der zweiten Wellenlänge in den Behälter, sodass sich die erste und die zweite Lichtquelle an einer ersten vorbestimmten Stelle innerhalb des Behälters schneiden, und das Ermöglichen der dritten Reaktion, um das feste Polymer an der ersten vorbestimmten Stelle zu bilden.

Zusammenfassung

Aufgabe der Erfindung ist es, ein Verfahren und eine Vorrichtung zum Bearbeiten eines optisch reaktiven Materials anzugeben, mit denen auf effiziente Art und Weise ein Ausgangsmaterial mehrdimensional optisch bearbeitet werden kann.

Zur Lösung sind ein Verfahren sowie eine Vorrichtung zum Bearbeiten eines optisch reaktiven Materials nach den unabhängigen Ansprüchen geschaffen. Ausgestaltungen sind Gegenstand von abhängigen Unteransprüchen.

Nacheinander werden die Schichtteilvolumen des Arbeitsvolumens mit der ersten und der zweiten Wellenlänge bestrahlt, um so eine optisch initiierte Reaktion in dem Ausgangsmaterial auszulösen. Die Schichtteilvolumen, welche nacheinander optisch bearbeitet werden, enthalten Teilvolumen des Ausgangsmaterials, dass vor dem Beginn des Fertigungsprozesses (optisches Bearbeiten) in dem Arbeitsvolumen eingebracht wird, und sind von diesen ausgefüllt. Im Unterschied zu bekannten Verfahren erfolgt beim optischen Bearbeiten kein schichtweiser Auftrag des Ausgangsmaterials und sich jeweils anschließendes schichtweises optisches Bearbeiten (der gerade aufgebrachten Schicht) nach dem Schichtauftrag.

In Abhängigkeit davon, welches Schichtteilvolumen innerhalb des vorher mit dem Ausgangsmaterial befüllten Arbeitsvolumens mit der ersten Wellenlänge bestrahlt wird, erfolgt die Projektion des Lichts der zweiten Wellenlänge mit Hilfe der Projektionseinrichtung in genau dieses momentan und aktuell mit der ersten Wellenlänge bestrahlte Schichtteilvolumen. Die Projektionseinrichtung bewirkt eine Abbildung des Lichts zweiter Wellenlänge in das aktuell gewünschte Schichtteilvolumen. Hierbei kann die Projektionseinrichtung das Licht zweiter Wellenlänge einer wenigstens zweidimensional geformten Abbildung entsprechend in die Projektionsebene oder das Projektionsvolumen abbilden, welche(s) sich in dem mit dem Licht erster Wellenlänge bestrahlten Schichtteilvolumen befindet. Auf diese Weise kann zum Beispiel in dem Ausgangsmaterial Schicht für Schicht ein dreidimensionaler Körper hergestellt werden.

Mit Hilfe einer Steuereinrichtung, die mit einer oder mehreren Lichtquellen zum Bereitstellen des Lichts erster und des Lichts zweiter Wellenlänge sowie der Projektionseinrichtung verbunden ist, kann bestimmt werden, ob das erste oder das zweite Schichtteilvolumen (des Ausgangsmaterials im Arbeitsvolumens) bestrahlt wird, und die Projektionseinrichtung kann in Abhängigkeit hiervon angesteuert werden, das Licht zweiter Wellenlänge in das erste oder das zweite Schichtteilvolumen zu projizieren. In der Steuereinrichtung werden hierbei Daten bereitgestellt, welche die aktuelle oder momentane Position des Schichtteilvolumens definieren, welcher mit Licht der ersten Wellenlänge bestrahlt wird. Hiervon ausgehend wird die Projektionseinrichtung gesteuert, derart, dass die mit Hilfe der Projektionseinrichtung erzeugte Projektion in einer Projektionsebene oder in einem Projektionsvolumen in dieses aktuell bestrahlte Schichtteilvolumen erfolgt. Auf diese Weise werden die Schichtteilvolumen des Ausgangsmaterials Schicht für Schicht nacheinander bearbeitet. Die äußere Form der Projektion der Projektionseinrichtung kann hierbei für unterschiedliche Schichtteilvolumen verschieden sein, insbesondere abhängig von einem dreidimensionalen Körper, der mit Hilfe der optischen Bearbeitung in dem Ausgangsmaterial hergestellt werden soll.

Es kann in einer Ausführungsform vorgesehen sein, eine aktuelle oder momentane Position des Schichtteilvolumens, das mit dem Licht erster Wellenlänge bestrahlt wird, in dem Arbeitsvolumen mit Hilfe einer Messeinrichtung zu detektieren, die dann die Position anzeigende Messsignale an die Steuereinrichtung gibt.

Das Licht erster Wellenlänge und das Licht zweiter Wellenlänge können zumindest für einen zeitlichen Überlappungszeitraum gleichzeitig gemeinsam in das erste oder das zweite Schichtteilvolumen eingestrahlt werden. Bei dieser Ausführungsform wird der von dem Schichtteilvolumen sowie der Projektion der Projektionseinrichtung erfasste Bereich zumindest für den zeitlichen Überlappungsbereich sowohl mit Licht der ersten Wellenlänge als auch mit Licht der zweiten Wellenlänge bestrahlt.

Das erste und das zweite Schichtteilvolumen können in dem Arbeitsvolumen benachbarte Schichtteilvolumen des Ausgangsmaterials bilden.

Es kann vorgesehen sein, dass das erste und das zweite Schichtteilvolumen einer der folgenden Konfigurationen von Teilvolumen entsprechend gebildet werden: randseitig überlappend, randseitig aneinanderstoßend und randseitig beabstandet zueinander.

Auf das Ausgangsmaterial im Arbeitsvolumen können das Licht erster Wellenlänge entlang einer ersten Einstrahlrichtung und das Licht zweiter Wellenlänge entlang einer zweiten Einstrahlrichtung eingestrahlt werden, die quer zur ersten Einstrahlrichtung verläuft. In einer Ausführungsform können die erste und die zweite Einstrahlrichtung zum Beispiel einen Winkel von etwa 90° einnehmen. Andere Winkel können im Bereich von etwa 30° bis 90° Grad zwischen den optischen Achsen der Einstrahlrichtungen können vorgesehen sein.

Das Licht erster Wellenlänge und / oder das Licht zweiter Wellenlänge können als gepulstes Licht eingestrahlt werden. Die Lichtimpulse des Lichts erster und zweiter Wellenlänge können zeitgleich oder im vorbestimmten zeitlichen Abstand nacheinander in das momentan bearbeitete Schichtteilvolumen eingestrahlt werden. Die Lichtimpulse für das Licht der beiden Wellenlängen können mit gleichen oder unterschiedlichen zeitlichen Impulsbreiten bereitgestellt werden. Alternativ kann das Licht erster Wellenlänge oder das Licht zweiter Wellenlänge als Dauerlicht eingestrahlt werden.

Das Ausgangsmaterial kann mittels des optischen Bearbeitens entsprechend wenigstens eines Bearbeitungsverfahrens aus der folgenden Gruppe bearbeitet werden: Aushärten, Härten, Gelieren und Verflüssigen. Bei dieser oder anderen Ausführungsformen kann das Ausgangsmaterial fest, flüssig oder pastös sein.

Es kann in einer Ausgestaltung vorgesehen sein, dass das Ausgangsmaterial aufgrund der optischen Bearbeitung mit dem Licht erster und zweiter Wellenlänge zum Leuchten gebracht wird, insbesondere aufgrund von Fluoreszenz oder Phosphoreszenz.

Zum Bestrahlen des ersten Schichtteilvolumens und zum Bestrahlen des zweiten Schichtvolumens mit dem Licht erster Wellenlänge kann ein schichtförmiger Einstrahlbereich einer ersten Lichtquelle, mit das Licht erster Wellenlänge bereitgestellt wird, relativ zum Arbeitsvolumen verlagert werden. Bei dieser Ausführungsform wird der schichtförmige Einstrahlbereich für das Licht erster Wellenlänge während der optischen Bearbeitung des Ausgangsmaterials relativ hierzu verschoben, so dass der Einstrahlbereich quasi über das Arbeitsvolumen läuft oder streicht. Die Relativbewegung zwischen Arbeitsvolumen und dem Einstrahlbereich kann auf verschiedene Art und Weise realisiert werden. Eine Verlagerung des Arbeitsvolumens und / oder der ersten Lichtquelle kann vorgesehen sein. Alternativ oder ergänzend können Arbeitsvolumen und erste Lichtquelle während der vollständigen Bearbeitung des Ausgangsmaterials relativ zueinander fixiert sein. Mit Hilfe einer Lichtumlenkeinrichtung wird dann der Einstrahlbereich für das Licht erster Wellenlänge von der ersten Lichtquelle über das Arbeitsvolumen mit dem Ausgangsmaterial bewegt.

Es kann vorgesehen sein, dass das optische Bearbeiten des Ausgangsmaterials mit Hilfe eines oder mehrerer Lichtdetektoren beobachtet wird, zum Beispiel mittels einer Kamera und / oder eines Fotodetektor. Hierbei können die Vorgänge bei der Prozessierung (optische Bearbeitung) untersucht werden, indem zum Beispiel transmittiertes Licht gemessen wird, sei es Licht der Anregung des Lichtschnitts und / oder Licht vom Projektor. Der Lichtschnittgenerator und / oder der Projektor können weitere Lichtwellenlängen emittieren, die von den Anregungswellenlängen verschieden sind und nur der Beobachtung der Änderung der Materialeigenschaft des Ausgangsmaterials dienen, zum Beispiel der ablaufenden Polymerisation.

Mittels des optischen Bearbeitens kann in dem Ausgangsmaterial eine polychrome Mehrphotonen-Polymerisation ("xolography") ausgelöst wird, welche die Veränderung der wenigstens einen Materialeigenschaft des Ausgangsmaterials bewirkt. Bei dieser beispielhaften Ausgestaltung kann das Ausgangsmaterial einen oder mehrere der folgenden Stoffe umfassen.

| Stoff | Strukturformel | Anteil von 27,1g Ausgangsmaterial insgesamt (Beispiel) |
|---|---|---|
| Dual-Color- Fotoinitiator | 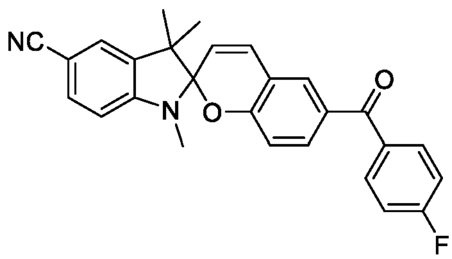 | 2 mg |
| Pentaerythritoltetraacrylate (Monomer) | 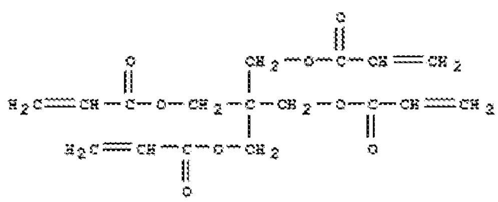 | 25,6g (21,5 ml) |

(fortgesetzt)

| Stoff | Strukturformel | Anteil von 27,1g Ausgangsmaterial insgesamt (Beispiel) |
|---|---|---|
| Triethanolamin | 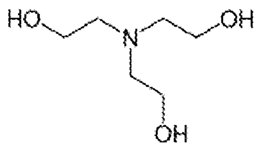 | (0,73g (1 ml) |
| Ethanol | 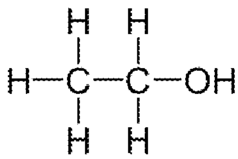 | (0,79g (1 ml) |

In einem Ausführungsbeispiel kann das Licht erster Wellenlänge zunächst in dem ersten Schichtteilvolumen und dann in dem zweiten Schichtteilvolumen mit einer in Bezug auf mindestens einen der folgenden Lichtparameter im Wesentlichen homogenen Verteilung eingestrahlt wird: Lichtintensität und Lichtfarbe. Auf diese Weise kann eine im Wesentlichen homogene Ausleuchtung des jeweiligen Schichtteilvolumens erreicht werden. Alternativ kann vorgesehen sein, dass das Licht erster Wellenlänge zunächst in dem ersten Schichtteilvolumen und dann in dem zweiten Schichtteilvolumen mit einer in Bezug auf mindestens einen der Lichtparameter nicht homogenen Verteilung eingestrahlt wird, wobei sich die inhomogene Verteilung im ersten Schichtteilvolumen von der inhomogenen Verteilung im zweiten Schichtteilvolumen unterschieden kann. Zum Beispiel kann für das Licht erster Wellenlänge ein Gradient für die Lichtintensität über die Breite und / oder die Höhe des Schichtteilvolumens ausgebildet sein.

Das Licht zweiter Wellenlänge kann zunächst auf das erste Schichtteilvolumen und dann auf das zweite Schichtteilvolumen jeweils mit einer in Bezug auf mindestens einen der folgenden Lichtparameter nicht-homogenen Verteilung projiziert wird: Lichtintensität und Lichtfarbe. Während das Licht erster Wellenlänge das jeweilige Schichtteilvolumen möglichst räumlich homogen oder gleichmäßig ausleuchten kann, erfasst das Licht zweiter Wellenlänge das Ausgangsmaterial in dem Schichtteilvolumen nicht homogen, sondern entsprechend der nicht homogenen Lichtverteilung der hierauf gerichteten Lichtprojektion (des Lichts zweiter Wellenlänge), um so die optischen Bearbeitung der nicht-homogenen Lichtverteilung (Lichtparameter) entsprechend zu bewirken. Dies ermöglicht die Ausbildung oder die Herstellung einer räumlichen äußeren Kontur. Wahlweise können pro Schichtteilvolumen verschiedene nicht-homogene Lichtverteilungen (unterschiedliche Projektionen) eingestrahlt werden.

Beim Bestrahlen des ersten Schichtteilvolumens und / oder beim Bestrahlen des zweiten Schichtteilvolumens mit dem Licht erster Wellenlänge kann ein Schichtteilvolumen mit einer Schichtdicke von höchstens etwa 1 mm bestrahlt oder erfasst werden. Alternative kann ein Schichtteilvolumen mit einer Schichtdicke von höchstens etwa 500 $\mu$m bestrahlt werden. In einer weiteren alternativen Ausgestaltung kann ein Schichtteilvolumen mit einer Schichtdicke von höchstens etwa 250 $\mu$m bestrahlt werden. Eine Mindestschichtdicke für bestrahlte Schichtteilvolumen kann etwa 10 $\mu$m betragen.

Sowohl ein Lichtschnitt der ersten Wellenlänge als auch das Projektorbild der zweiten Wellenlänge können in einer Ausgestaltung mittels eines (einzigen oder integrierten) Projektionsgeräts erzeugt und dann auf / in das Aufnahmegefäß eingestrahlt werden. Eine Anordnung von Lichtreflexionselementen, insbesondere Spiegeln, kann hierbei vorgesehen sein, um eine Abspaltung des Lichtschnitts aus einer Strahlachse des Projektionsgerätes und die Einstrahlung des Lichtschnitts quer zum Projektionsbild in das Aufnahmegefäß zu bewirken.

In einer Ausführungsform kann das Aufnahmegefäß bewegt werden, um den Lichtschnitt durch das Arbeitsvolumen zu bewegen. Das Projektorbild kann mittels einer variablen Fokusoptik innerhalb des Lichtschnitts scharf abgebildet werden. In einer weiteren Ausgestaltung bleibt das Aufnahmegefäß unbewegt, und der Lichtschnitt wird bewegt, zum Beispiel indem ein Displayelement des Projektionsgerätes, zum Beispiel eine LC- oder ein DM-Display, aufgeteilt wird in einen zentralen Bereich, der das Projektorbild erzeugt, und in zwei seitlich davon gelagerte Bereiche, die den Lichtschnitt erzeugen. Hierzu können Pixel des Displayelements mittels Ansteuerung der optischen Transmission und / oder Reflexion des Displayelements so angesteuert werden, eine seitliche Verschiebung des Lichtschnitts zu realisieren. Hierbei können ein zentraler Bereich des Displayelements mit der ersten Wellenlänge und äußeren Bereiche des Displayelements mit der zweiten Wellenlänge bestrahlt werden.

Es kann vorgesehen sein, Licht (mindestens) einer dritten Wellenlänge auf das zu bearbeitende Material einzustrahlen, wobei die dritte Wellenlänge von der ersten und der zweiten Wellenlänge verschieden ist. Hierbei kann das Licht dritter Wellenlänge zum Beispiel zeitgleich oder zeitlich versetzt zum Einstrahlen des Lichts zweiter / erster Wellenlänge auf ein aktuell bearbeitetes Schichtteilvolumen eingestrahlt werden. Hierzu kann die Projektionseinrichtung oder eine weitere Projektionseinrichtung genutzt werden, um die Lichteinstrahlung wahlweise auf das aktuelle Schichtteilvolumen zu begrenzen. Hierdurch können in dem Arbeitsvolumen des zu bearbeitenden Materials initiierte oder ablaufende chemische / physikalisch Prozesse zur Materialbehandlung (ergänzend) beeinflusst werden, zum Beispiel bei der Nutzung der polychromen Mehrphotonen-Polymerisation.

Im Zusammenhang mit der Vorrichtung zum Bearbeiten des optisch reaktiven Materials können die vorangehend im Zusammenhang mit dem Verfahren erläuterten Ausgestaltungen entsprechend vorgesehen sein.

## Beschreibung von Ausführungsbeispielen

Im Folgenden werden weitere Ausführungsbeispiele unter Bezugnahme auf Figuren einer Zeichnung näher erläutert. Hierbei zeigen:

| | |
|---|---|
| Fig. 1 | eine schematische Darstellung einer Vorrichtung zum Bearbeiten eines optisch reaktiven Materials von oben; diese Vorrichtung ist nicht durch die Patentansprüche abgedeckt. |
| Fig. 2 | eine schematische Darstellung der Vorrichtung aus Fig. 1 von der Seite; |
| Fig. 3a bis 3c | eine schematische Darstellungen einer Anordnung zum optischen Bearbeiten eines Ausgangsmaterials in einem Aufnahmegefäß; |
| Fig. 4 | eine schematische Darstellungen einer weiteren Anordnung zum optischen Bearbeiten eines Ausgangsmaterials in einem Aufnahmegefäß; |
| Fig. 5 | eine schematische Darstellungen einer anderen Anordnung zum optischen Bearbeiten eines Ausgangsmaterials in einem Aufnahmegefäß mittels eines Projektionsgeräts; |
| Fig. 6 | eine schematische Darstellung einer weiteren Anordnung zum optischen Bearbeiten eines Ausgangsmaterials in einem Aufnahmegefäß (diese Anordnung ist nicht durch die Patentansprüche abgedeckt) und |
| Fig. 7 | eine schematische Teildarstellung der Anordnung aus Fig. 6. |

Fig. 1 und 2 zeigen eine schematische Darstellung einer Anordnung für eine Vorrichtung zum optischen Bearbeiten eines optisch reaktiven Materials von oben und von der Seite. Diese Anordnung und diese Vorrichtung sind nicht durch die Patentansprüche abgedeckt. In einem Aufnahmegefäß 1 ist ein Arbeitsvolumen 2 bereitgestellt, welches wenigstens teilweise von einem Ausgangsmaterial 3 ausgefüllt ist. Das Ausgangsmaterial kann ein oder mehrere Stoffe umfassen, die fest, flüssig oder pastös sein können. Zum Bearbeiten wird das Ausgangsmaterial 3 mit Licht einer ersten Wellenlänge und Licht einer zweiten Wellenlänge bestrahlt, die in dem Arbeitsvolumen 2 zum Auslösen einer optisch aktivierten Reaktion in einem Schichtteilvolumen 4 überlappend eingestrahlt werden.

Das Licht erster Wellenlänge wird mit Hilfe einer ersten Lichtquelle 5 bereitgestellt, die bei der gezeigten Ausführungsform beispielhaft als ein Lichtschnittgenerator ausgeführt ist. Beim Bearbeiten des Ausgangsmaterials 3 wird ein Einstrahlbereich 6 für das Licht erster Wellenlänge (Lichtschnitt), welcher bei der gezeigten Ausführungsform tailliert ist, Stück für Stück über das Arbeitsvolumen 2 bewegt, so dass eine schichtweise Bearbeitung des Ausgangsmaterials 3 stattfindet. Es werden also Schichtteilvolumen des zuvor mit dem Ausgangsmaterial 3 befüllten Arbeitsvolumens 2 (schichtförmige Teilvolumen des Arbeitsvolumens 2) nacheinander bestrahlt, insbesondere einander nicht überlappende Schichtteilvolumen.

In Abhängigkeit von der aktuellen Position des Einstrahlbereichs 6 (Lichtschnitt) wird das Licht zweiter Wellenlänge mit Hilfe eines Projektors 7 in das aktuell mit dem Licht erster Wellenlänge bestrahlte Schichtteilvolumen projiziert (Projektor- oder Projektionsbild). Dieses bedeutet, dass die Projektionsebene oder das Projektionsvolumen des Projektors 7 in dem Schichtteilvolumen liegen, welches gerade mit dem Licht erster Wellenlänge bestrahlt wird. Das Licht erster Wellenlänge (Lichtschnitt) und das Licht zweiter Wellenlänge (Lichtprojektion) überlappen so räumlich oder in einer Projektionsebene des Projektors 7 flächig in einem makroskopischen Schichtteilvolumen des Ausgangsmaterials 3, welches als Teilvolumen des Arbeitsvolumens 2 gerade mittels des Lichtschnitts bestrahlt wird.

Auf diese Weise wird in dem aktuell bestrahlten schichtförmigen Teilvolumen wenigstens eine Materialeigenschaft des Ausgangsmaterials 3 verändert, beispielsweise dahingehend, dass das ursprüngliche Ausgangsmaterial aushärtet. Hierbei kann aufgrund des Zusammentreffens des Lichts der beiden Wellenlängen eine Polymerisation im Ausgangsmaterial 3 ausgelöst werden. Auf diese Weise ist es beispielsweise ermöglicht, einen dreidimensional geformten Körper Schicht für Schicht in dem Arbeitsvolumen 2 herzustellen. Die dreidimensionale Formung des Körpers wird hierbei mit Hilfe der in das jeweilige Schichtvolumen abgebildeten Projektion des Projektors 7 beeinflusst und bestimmt.

Die Vorrichtung und das Verfahren erlauben eine Anpassung an unterschiedliche Volumina des Ausgangsmaterials 3. Ferner erlaubt es eine Optimierung zwischen Auflösung und Geschwindigkeit der Prozessierung.

Bei der Verwendung von idealen Dual-Color-Fotoinitiatoren im Ausgangsmaterial 3 erfolgt die Anregung des aktiven Zustandes C nur bei Absorption beider Wellenlängen $\lambda_1$ und $\lambda_2$ (erste und zweite Wellenlänge). Für nicht ideale

Fotoinitiatoren kann ein Übergang vom Zwischenzustand B in den aktiven Zustand C auch durch Absorption der Wellenlänge $\lambda_1$ erfolgen. In Konsequenz werden Fotoinitiatoren nicht nur am Kreuzungspunkt beider Wellenlängen, sondern auch entlang des gesamten Lichtstrahls der Wellenlänge $\lambda_1$ in den Zustand C überführt. Da es vom aktiven Zustand C des Fotoinitiators keinen Rückweg in den Grundzustand A gibt, akkumuliert sich bei der Prozessierung mehrerer gewünschter Zielpunkte, eine erhebliche Menge Initiatoren im aktiven Zustand C in ungewünschten Gebieten. Die Vorrichtung erlaubt es, im Überlappungsbereich der Lichtstrahlen eine ausreichende Initiatorkonzentration im aktiven Zustand C für die Polymerisation des Ausgangsmaterials zu erzeugen, bei gleichzeitiger Minimierung der generierten Konzentration an Initiator-Molekülen im aktiven Zustand C entlang des Lichtstrahls erster Wellenlänge $\lambda_1$. Ferner ermöglicht es die Vorrichtung, die Akkumulierung von Fotoinitiatoren im aktiven Zustand C in ungewünschten Bereichen des Volumens verursacht durch die Lichtüberlagerung für viele aufeinanderfolgende Zielpunkte zu minimieren.

Zeigt der Grundzustand A eine Absorptionsbande bei der zweiten Wellenlänge $\lambda_2$, kann der Fotoinitiator durch Licht der Wellenlänge $\lambda_2$ in den Zwischenzustand B und folgend in den aktiven Zustand C überführt werden. In Konsequenz werden Fotoinitiatoren nicht nur am Überlappungsbereich beider Wellenlängen, sondern auch entlang des gesamten Lichtstrahls der Wellenlänge $\lambda_2$ in den Zustand C überführt. Da es vom aktiven Zustand C des Fotoinitiators keinen Rückweg in den Grundzustand A gibt, akkumuliert sich bei der Prozessierung mehrerer gewünschter Zielpunkte, eine erhebliche Menge Initiatoren im aktiven Zustand C in ungewünschten Gebieten. Die Vorrichtung ermöglicht es, im Überlappungsbereich der Lichtstrahlen eine ausreichende Initiatorkonzentration im aktiven Zustand C für die gewünschte Modifikation des Ausgangsmaterials 3 zu erzeugen, bei gleichzeitiger Minimierung der generierten Konzentration von Initiator-Molekülen im aktiven Zustand C entlang des Lichtstrahls der Wellenlänge $\lambda_2$. Ferner soll die Vorrichtung ermöglichen, die Akkumulierung von Fotoinitiatoren im aktiven Zustand C in ungewünschten Bereichen des Volumens, verursacht durch die Lichtüberlagerung für viele aufeinanderfolgende Zielpunkte, zu minimieren.

Die Vorrichtung und das Verfahren können mit anderen Techniken kombiniert werden, welche die unerwünschte Aushärtung durch Akkumulation von Fotoinitiatoren im aktiven Zustand C begrenzen. In einem Beispiel kann die Sauerstoffkonzentration im Ausgangsmaterial eingestellt werden, um den Schwellwert, ab welchem es zum Aushärten des Materials kommt, zu variieren.

Nachfolgend werden weitere Aspekte der Vorrichtung zum optischen Bearbeiten des Ausgangsmaterials 3 erläutert.

Das Ausgangsmaterial 3 kann in einem transparenten Gefäß (Aufnahmegefäß 1) mit mindestens zwei optisch planen Eintrittsfenstern aufgenommen sein, welches das Ausgangsmaterial 3 mit den zugesetzten Dual-Color-Fotoinitiator-Molekülen oder anderen optisch aktiven Molekülen und gegebenenfalls weitere Additive wie Koinitiatoren aufnimmt. Die als Lichtgenerator mit Abbildungsoptik ausgeführte Lichtquelle 5 erzeugt einen Lichtschnitt der Wellenlänge $\lambda_1$, welches durch ein Fenster des Aufnahmegefäßes 1 in das Arbeitsvolumen 2 eingestrahlt wird. Der Projektor 7 mit einer Leuchtquelle der Wellenlänge $\lambda_2$ erzeugt ein Bild, welches über ein Objektiv innerhalb des Lichtschnitts in dem Aufnahmegefäß 1 scharf abgebildet wird.

Durch die Brechung des eingestrahlten Lichts zweiter Wellenlänge an den Übergängen zwischen Luft und dem Aufnahmegefäß 1 und zwischen dem Aufnahmegefäß 1 und dem Ausgangsmaterial 3 kann sich eine Verschiebung der Fokusebene des projizierten Bildes (Licht zweiter Wellenlänge) im Vergleich zur optischen Abbildung ohne Aufnahmegefäß 1 ergeben. Bei großen Arbeitsvolumina des Aufnahmegefäßes 1 kann die Schärfetiefe des fokussierten Projektorbildes nicht ausreichend sein. In diesem Zusammenhang kann dann während der Bewegung des Lichtschnitts durch das Arbeitsvolumen 2 kontinuierlich eine Fokuskorrektur erfolgen.

Für Anwendungen im Bereich des 3D-Drucks kann der Brechungsindex des Ausgangsmaterials 3 ähnlich dem Material des Aufnahmegefäßes 1 sein. In diesem Fall führt nur der Übergang Luft mit Brechungsindex $n_1$ und Aufnahmegefäß 1 mit Brechungsindex $n_2$ zu einer Verschiebung der Fokusebene um den Betrag $\Delta s$ gegeben durch:

$$\Delta s = d \cdot \left(\frac{n_2}{n_1} - 1\right)$$

Mit zunehmendem Abstand d der Position des Lichtschnitts (Licht erster Wellenlänge) von einem Eintrittsfenster des Aufnahmegefäßes 1, wo das Projektorbild eintritt, nimmt die Fokusverschiebung gemäß der obigen Gleichung zu. Die Gleichung betrifft einen paraxialen, optischen Strahlengang beziehungsweise größere Abstände zwischen Projektor 7 und Aufnahmegefäß 1. Je nach Ausgestaltung, kann eine Kompensation der Verschiebung mittels einer motorisierten Fokusverstellung des fest montierten Projektors 7 oder mittels einer motorisierten Positionierung des gesamten Projektors 7 relativ zur Lichtschnittposition erfolgen. Im letztgenannten Beispiel ergibt sich eine gleichförmige, lineare Relativbewegung des Projektors 7 zum festen Lichtschnitt während der gleichförmigen Bewegung des Aufnahmegefäßes 1 durch den Lichtschnitt (Schichtteilvolumen) zur Prozessierung des gesamten Arbeitsvolumens 2.

Alternativ zu dem in Fig. 1 veranschaulichten Aufbau, kann das Projektorbild auch durch den Boden oder den Deckel des Aufnahmegefäßes 1 in das Arbeitsvolumen 2 eintreten, und der Lichtschnitt kann senkrecht hierzu durch

eine oder mehrere der Seitenfenster eingekoppelt werden.

Alternativ kann der Lichtschnittgenerator 5 die Wellenlänge $\lambda_2$ erzeugen, und der Projektor 7 erzeugt die Wellenlänge $\lambda_1$.

Sofern der Übergang vom Zwischenzustand B in den Ausgangszustand A mit Licht der Wellenlänge $\lambda_3$ erfolgen soll, erzeugt der Projektor 7 die Wellenlängen $\lambda_1$ und $\lambda_3$ oder die Wellenlängen $\lambda_2$ und $\lambda_3$, jeweils komplementär zur Wellenlänge des Lichtschnittgenerators.

Das Aufnahmegefäß 1 kann auch als Durchfluss-System mit automatisierter Zu- und Abführung des Ausgangsmaterials 3 realisiert werden, um ausgedehnte Volumina zu prozessieren.

Ein oder mehrere Lichtdetektoren 8a, 8b (Kamera oder einfacher Fotodetektor; vgl. Fig. 1 und 2) können benutzt werden, um die Vorgänge bei der Prozessierung zu untersuchen, indem das transmittierte Licht der Anregung des Lichtschnitts und gegebenenfalls des Projektors 7 gemessen wird. Hierbei können der Lichtschnittgenerator 5 und gegebenenfalls auch der Projektor 7 weitere Lichtwellenlängen emittieren, die von den Anregungswellenlängen verschieden sind und nur der Beobachtung der Änderung der Materialeigenschaft des Ausgangsmaterials 3 dienen, zum Beispiel der Polymerisation.

Weiterhin kann eine Messung der emittierten Fluoreszenz von im Ausgangsmaterial 3 befindlichen, angeregten Fotoinitiatoren vorgesehen sein. Es können zum Beispiel die Intensität des gesamten transmittierten oder emittierten Lichts über einen Einzelphotodetektor gemessen und / oder die ortsaufgelöste Intensität über eine Kamera aufgezeichnet werden. Die Detektoren können über vorgesetzte Filter oder Spektrographen selektiv nur bestimmte Lichtwellenlängen des Projektors 7, des Lichtschnittgenerators 5 oder der Licht emittierenden, angeregten Fotoinitiatoren messen.

Die Auswertung der gesamten oder ortsaufgelösten Intensitäten kann eine Regelschleife steuern, welche die Intensität des Lichtschnittgenerators, die Intensität und Bildausgabe des Projektors, die Zeitsteuerung der Belichtungssequenz sowie die Verschiebung des Lichtschnitts innerhalb des Aufnahmegefäßes 1 beeinflusst. Hierfür ist eine Steuereinrichtung 9 vorgesehen, die gemäß Fig. 1 an die Lichtquelle 5 und den Projektor 7 koppelt.

Als Lichtquelle 5 kann eine Laserlichtquelle genutzt werden, zum Beispiel ein pulsbarer Single-Mode-Diodenlaser (Fabrikat: IBEAM SMART, Toptica Photonics AG, DE) mit einer Wellenlänge von 375nm und einer Ausgangsleistung im Dauerstrichbetrieb von max. 70mW, der Laserstrahldurchmesser beträgt 1.3mm (@ $1/e^2$). Eine asphärische POWELL Linse (Auffächerungswinkel 30°, N-BK7, Edmund Optics GmbH, DE) dient zur Umformung des Laserstrahls in eine divergierende Laserlinie. Eine direkt dahinter angeordnete plankonvexe Zylinderlinse mit langer Brennweite (f = 300.00 mm, N-BK7, Thorlabs GmbH, DE) und senkrechter Orientierung zur Auffächerungsebene generiert in einem Ausführungsbeispiel eine Strahltaille mit einem Durchmesser von etwa d=100$\mu$m an der Position des Gefäßes mit dem Ausgangsmaterial im Abstand von 30cm von dieser Linse. Eine plankonvexe Zylinderlinse (f = 150.00 mm, N-BK7, Thorlabs GmbH, DE) im Abstand der einfachen Brennweite zur POWELL Linse kollimiert die divergierende Laserlinie und sorgt für einen annährend parallelen Strahlenverlauf entlang der optischen Achse, die Höhe des Lichtschnitts nach der Kollimierung beträgt ca. 8.5cm. Vor dem Gefäß ist eine weitere Zylinderlinse der Brennweite (f = 100.00 mm, N-BK7) flexibel positioniert, welche den Strahlenverlauf in einen zulaufenden Lichtschnitt überführt, welche den Intensitätsabfall durch das Lambert-Beersche Absorptionsgesetz innerhalb des Gefäßes vermindert. Die nutzbare Höhe des Lichtschnitts im Bereich des Gefäßes durch die Fokussierung liegt bei etwa 2cm.

Für eine Umformung eines Laserstrahls in eine divergierende Laserlinie kann alternativ zur POWELL Linse auch ein geeignet angeordneter rotierender Polygonspiegel oder ein Galvoscanner verwendet werden. Prinzipiell ist es auch möglich, anstelle des Lasers eine Lichtquelle zu verwenden, die auf einer LED (Lichtemittierende Diode) oder einer thermischen Lichtquelle basiert.

Als Bildprojektor oder Projektor 7 kann ein DMD (Digital Micromirror Device der Firma Texas Instruments) basierender Projektor (Fabrikat: ACER X138WH, Acer Group, Taiwan) mit einer Auflösung von 1280 x 720 Pixeln und 3300 Ansi Lumen verwendet werden. Die Projektionsoptik wurde ersetzt durch ein Projektionsobjektiv mit 90mm Brennweite (Braun Ultralit 2,4 / 90, Braun Photo Technik GmbH, Deutschland), welches ein scharfes Abbild innerhalb des Gefäßes generiert. Zur Wellenlängenselektion dient ein vorgesetztes Filterglas (GG475, Schott AG, Deutschland). Die Ansteuerung des Projektors 7 erfolgt über ein HDMI-Interface.

Als Aufnahmegefäß 1 kann zum Beispiel eine Großküvette aus optischem Glas (Innenmaße: 30mm x 30mm x 30mm, Hellma GmbH & Co. KG, DE) mit transparenten, planen Eintrittsfenstern verwendet werden.

In den Fig. 3a bis 3c zeigen schematische Darstellungen für eine Anordnung mit Aufnahmegefäß 1, in welchem das Arbeitsvolumen 2 mit dem hierin aufgenommenen Ausgangsmaterial 3 zum optischen Bearbeiten angeordnet ist. Es ist eine Anordnung von Lichtquellen 30 vorgesehen. Die Lichtquellen 30 (Lichtgeneratoren für Erzeugung des Lichtschnitts 31), die dem Einstrahlen des Lichts erster Wellenlänge (Lichtschnitt) dienen, sind benachbart zum Aufnahmegefäß 1 angeordnet, insbesondere auf gegenüberliegenden Seiten. Bei der Ausgestaltung nach Fig. 3c ist die Anordnung von Lichtquellen 30 um das Aufnahmegefäß 1 mit dem Arbeitsvolumen 2 drehbar angeordnet, was mittels Pfeilen 32 schematisch gezeigt ist.

Zwei oder mehrere der Lichtquellen 30 können benutzt werden, die von unterschiedlichen Seiten des Aufnahmegefäßes 1 in das Arbeitsvolumen 2 einstrahlen und mittels Überlagerung von Teilstrahlen den Lichtschnitt 31 generieren, also das jeweilige Schichtteilvolumen bestrahlen, in welche dann die Projektion 33 hinein erfolgt..

Der Lichtschnitt 31 für das jeweils gerade bestrahlte Schichtteilvolumen ergibt sich durch die Aufsummierung der Einzeleinstrahlungen von den Lichtquellen 30 unter verschiedenen Einstrahlwinkeln. Um eine homogene Intensitätsverteilung des Lichtschnitts 31 mittels Überlagerung des Lichts von zwei oder mehrere Lichtquellen zu erzielen, können die Einzeleinstrahlungen anstelle einer homogenen Intensitätsverteilung eine gaußförmige oder eine angepasste inhomogene Intensitätsverteilung aufweisen.

Bei einer weiteren Ausgestaltung nach Fig. 4 werden zwei oder mehrere Lichtschnitte 40 (Schichtteilvolumen) generiert, die unter einem Winkel in das Aufnahmegefäß 1 einfallen. Ein oder mehrere Projektionen 41 von Projektoren (zur Vereinfachung nicht gezeigt in Fig. 4) erzeugen in einer schrägen Fokusebene scharfe Abbildungen innerhalb der einzelnen Lichtschnitte 40. Hierdurch kann eine Prozessierung mehrerer Schichtteilvolumen gleichzeitig erfolgen.

Bei den Ausgestaltungen nach den Fig. 3a bis 3c, 4 kann das Aufnahmegefäß 1 durch den Lichtschnitt 31, 40 bewegt werden, oder der Lichtschnitt 31, 40 bei fester Position des Aufnahmegefäßes 1 verschoben werden, um das Arbeitsvolumen 2 kontinuierlich und schließlich vollständig zu prozessieren, indem dessen Schichtteilvolumen nacheinander optisch bearbeitet werden.

Fig.5 zeigt schematische Darstellungen für eine weitere Anordnung mit Aufnahmegefäß 1. Sowohl ein Lichtschnitt 50 der ersten Wellenlänge als auch ein Projektorbild 51 der zweiten Wellenlänge werden mittels eines Projektionsgeräts 52 erzeugt und dann auf das Aufnahmegefäß 1 eingestrahlt. Eine Anordnung von Lichtreflexionselementen 53, insbesondere Spiegeln, sorgt für die Abspaltung des Lichtschnitts 50 aus einer Strahlachse des Projektionsgerätes 52 und die Einstrahlung des Lichtschnitts 50 quer zum Projektionsbild 51 in das Aufnahmegefäß 1.

In einer Ausführungsform kann das Aufnahmegefäß 1 bewegt werden, um den Lichtstrahl durch das Arbeitsvolumen 2 zu bewegen. Das Projektorbild 51 wird mittels einer variablen Fokusoptik innerhalb des Lichtschnitts 50 scharf abgebildet. In einer weiteren Ausgestaltung bleibt das Aufnahmegefäß 1 unbewegt, und der Lichtschnitt 50 wird bewegt, indem ein Displayelement des Projektionsgerätes 52, zum Beispiel eine LCD- oder ein DMD-Display, aufgeteilt wird in einen zentralen Bereich 54, der das Projektorbild 51 erzeugt, und in zwei seitlich davon gelagerte Bereiche 55, die den Lichtschnitt 50 erzeugen. Hierzu werden Pixel des Displayelements mittels Steuerung der optischen Transmission oder Reflexion des Displayelements so angesteuert, um eine seitliche Verschiebung des Lichtschnitts 50 zu realisieren. Hierbei werden ein zentraler Bereich des Displayelements mit der ersten Wellenlänge und äußeren Bereiche des Displayelements mit der zweiten Wellenlänge bestrahlt.

Fig. 6 zeigt eine schematische Darstellung einer weiteren Anordnung zum optischen Bearbeiten des Ausgangsmaterials 3 im Aufnahmegefäß 1. Diese Anordnung ist nicht durch die Patentansprüche abgedeckt. Fig. 7 zeigt eine schematische Teildarstellung der Anordnung aus Fig. 6.

Ein Lichtschnitt 60 wird in einer horizontalen Ebene 61 mittels eines Laserstrahls 62 generiert, der von oben in ein für den Laserstrahl 62 optisch transparentes Tauchrohr 63 eintritt und mittels eines motorgetriebenen, rotierenden Spiegels 64 in das Aufnahmegefäß 1 mit dem Ausgangsmaterial 3 umgelenkt wird. Mittels Rotation entsteht der Lichtschnitt 60 der ersten Wellenlänge. Durch einen Boden 65 des Aufnahmegefäßes 1 wird Projektorlicht 66 zweiter Wellenlänge eingestrahlt, um ein Projektorbild 67 in die horizontalen Ebene 61 des Lichtschnitts 60 scharf abzubilden.

Das Tauchrohr 63 ist nach unten geschlossen. Der motorgetriebene, rotierende Spiegel 64 sowie der Laserstrahlweg 62 sind vom Ausgangsmaterial 3 im Aufnahmegefäß 1 getrennt. Für die Prozessierung des Ausgangsmaterials 3 wird das Tauchrohr 63 hoch oder runter bewegt, wodurch die horizontale Ebene des Lichtschnitts 60 nach oben oder nach unten verschoben wird.

Nachfolgend werden weitere Aspekte des Verfahrens zum optischen Bearbeiten des Ausgangsmaterials 3 erläutert.

Die lokale Polymerisation des Ausgangsmaterials 3, vermittelt über die Lichtanregung der Fotoinitiatoren, erfolgt durch ein sequentielles Verfahren, bei dem eine Prozessierung Schicht für Schicht im freien Volumen innerhalb des Aufnahmegefäßes 1 erfolgt. Zunächst ist hierfür eine Zerlegung des gewünschten, dreidimensionalen Objektes in einzelne Schichtbilder mit definiertem Rasterabstand vorgesehen (Slicing). Mittels Überlagerung des Lichtschnitts von der Lichtquelle 5 und des jeweiligen Schnittbildes des Projektors 7 erfolgt die Anregung der Dual-Color-Fotoinitiatoren vom Grundzustand A in die aktive Form C, welche die lokale Polymerisation des Ausgangsmaterials 3 initiiert. Nach Ablauf der Belichtungssequenz für die aktuelle Schicht (Schichtteilvolumen) wird durch Bewegung des Aufnahmegefäßes 1 und / oder des Lichtschnitts und des Projektors 7 gemeinsam die Lichtanregung definiert verschoben und die Belichtung einer benachbarten oder beliebigen anderen Schicht (anderes Schichtteilvolumen) vorgenommen. Die Translation der Projektionsanordnung oder des Aufnahmegefäßes 1, die zum Beispiel mittels geeigneter Schrittmotoren realisiert werden kann, kann gegebenenfalls unterhalb des Taillen-Durchmessers des Lichtschnitts liegen, um eine Erhöhung der Auflösung in Bewegungsrichtung zu erzeugen.

Für den zeitlichen Ablauf einer Belichtungssequenz für jedes Schichtteilvolumen gibt es verschiedene Optionen, die je nach Ausgangsmaterial und den Eigenschaften der verwendeten Dual-Color-Fotoinitiatoren zur Anwendung kommen:

Variante (1): Gleichzeitiges Einschalten beider Lichtquellen ($\lambda_1$, $\lambda_2$ und gegebenenfalls $\lambda_3$) mit definierten, gegebenenfalls unterschiedlichen Intensitäten für eine vorgegebene Belichtungszeitspanne. Nach dem gleichzeitigen Abschalten beginnt die Translation des Systems zur nächsten Schicht.

Variante (2): Die erste Lichtquelle 5 (Lichtschnittgenerator) und der Projektor 7 werden zeitlich gepulst betrieben. Die Anzahl, Dauer und Intensität der Impulse sowie der Zeitversatz zwischen den Startflanken beider Impulse können im Rahmen einer definierten Belichtungszeit pro Schichtteilvolumen frei eingestellt werden. Bei der Verwendung mehrerer Impulse innerhalb der Prozessierung eines Schichtteilvolumens können jedem Impuls ein unterschiedliches Bild des Projektors 7 zugeordnet werden. Nach der Belichtungszeit erfolgt die Translation zum nächsten Schichtteilvolumen.

Variante (3): Die erste Lichtquelle 5 (Lichtschnittgenerator) bleibt immer eingeschaltet, während das Projektorbild nach einer definierten Belichtungszeit mit der Translation der Anordnung zur nächsten Schicht, umgeschaltet wird.

Variante (4): Physikalisch mögliche Kombinationen der Varianten (1), (2) und (3).

Das hier vorgestellte volumetrische Verfahren generiert das gewünschte räumliche Objekt durch Polymerisation des Ausgangsmaterials 3 innerhalb des Arbeitsvolumens 2 schichtweise, jedoch lässt es den grundlegenden Aufbau des Ausgangsmaterials 3 unverändert. Dies ist ein Vorteil gegenüber Verfahren, die das Ausgangsmaterial nur in voneinander getrennten Schichten prozessieren können. Durch die schichtweise Belichtung ist das Verfahren prinzipiell schneller als die Polymerisation des Ausgangsmaterials Punkt für Punkt.

Aufgrund der Aufweitung des Lichtschnittes lässt sich ein größerer Bereich des Arbeitsvolumens 2 gleichzeitig und damit schneller prozessieren, was jedoch einen Verlust an Auflösung bedingt.

Die Erzeugung des Lichtschnittes mittels der Lichtquelle 5 bedingt eine Kopplung zwischen dem minimalen Taillendurchmesser und der Divergenz des Strahlbündels, die zu einer Aufweitung des Lichtstrahls zum Rand des Volumens führt. Dadurch lässt sich entweder eine homogene, mittlere Auflösung entlang des Lichtschnittes erzeugen oder eine höhere Auflösung im Bereich der Taille mit stärkerem Abfall zu den Rändern generieren.

Da im zeitlichen Ablauf eine frühere Prozessierung von Schichten ermöglicht ist, die zum Projektor 7 weiter entfernt liegen, wird eine mögliche Beeinflussung der Lichtpropagation des Projektorbildes (Licht zweiter Wellenlänge) durch schon ausgehärtete Schichten vermieden.

Aufgrund der Verschiebung des Lichtschnitts wird jedes Schichtteilvolumen nur einmal prozessiert und erhält damit eine definierte Energiedosis. Dadurch wird die Polymerisierung von ungewünschten Gebieten, bei der Verwendung von nicht-idealen Dual Color Fotoinitiaoren, effektiv vermindert.

Ist die Kinetik der durch die Lichteinstrahlung ausgelösten Reaktionen der Fotoinitiator-Moleküle und des Ausgangsmaterials 3 hinreichend bekannt, erlaubt die gezielte Zeitsteuerung der Lichtimpulse zueinander und geeignete Wahl der Intensitäten beider Wellenlängen eine höhere Diskriminierung zwischen gewünschter und ungewünschter Polymerisation im Arbeitsvolumen 2. Hierdurch lassen sich Artefakte und eine Degradation der Auflösung für nicht-ideale Dual-Color-Fotoinitiatoren vermindern.

## Patentansprüche

**1.** Verfahren zum Bearbeiten eines optisch reaktiven Materials, mit:

- Bereitstellen eines Ausgangsmaterial (3), welches optisch reaktiv ist und ein Arbeitsvolumen (2) ausfüllt, welches in einem Aufnahmegefäß (1) angeordnet ist; und
- optisches Bearbeiten des Ausgangsmaterials (3) in dem Arbeitsvolumen (2) mittels Einstrahlen von Licht einer ersten Wellenlänge und Licht einer zweiten Wellenlänge, die von der ersten Wellenlänge verschieden ist, wobei das Licht erster Wellenlänge und das Licht zweiter Wellenlänge von einer Beleuchtungseinrichtung bereitgestellt werden und mittels des optischen Bearbeitens wenigstens eine Materialeigenschaft des Ausgangsmaterials verändert wird und das optische Bearbeiten Folgendes umfasst:
    - Bestrahlen eines ersten Schichtteilvolumens des mit dem Ausgangsmaterial (3) ausgefüllten Arbeitsvolumens (2) mit dem Licht erster Wellenlänge;
    - Bestrahlen des ersten Schichtteilvolumens des Arbeitsvolumens (2) mit dem Licht zweiter Wellenlänge, wobei das Licht zweiter Wellenlänge hierbei mittels einer Projektionseinrichtung (7) nur das erste Schichtteilvolumen ganz oder teilweise erfassend in das Arbeitsvolumen (2) projiziert wird;
    - Bestrahlen eines zweiten Schichtteilvolumens des mit dem Ausgangsmaterial (3) ausgefüllten Arbeitsvolumens (2), welches von dem ersten Schichtteilvolumen verschieden ist, mit dem Licht erster Wellenlänge;
    - Bestrahlen des zweiten Schichtteilvolumens des Arbeitsvolumens (2) mit dem Licht zweiter Wellenlänge, wobei das Licht zweiter Wellenlänge hierbei mittels der Projektionseinrichtung (7) nur das zweite Schichtteilvolumen ganz oder teilweise erfassend in das Arbeitsvolumen (2) projiziert wird; und
- Wiederholen der vorangehenden Schritte zur schichtweisen optischen Bearbeitung des Ausgangsmaterials (3) in dem Arbeitsvolumen (2) bis ein zu bearbeitendes Volumen des Ausgangsmaterials (3), welches das Arbeitsvolumen (2) ganz oder teilweise erfasst, optisch bearbeitet ist,

**dadurch gekennzeichnet, dass** das Licht erster Wellenlänge mittels mehrerer Lichtgeneratoren für die Erzeugung eines Lichtschnitts eingestrahlt wird, die von unterschiedlichen Seiten des Aufnahmegefäßes (1) in das Arbeitsvolumen (2) einstrahlen und mittels Überlagerung von Teilstrahlen den Lichtschnitt (31) generieren, in welchen die Projektion (33) erfolgt.

**2.** Verfahren nach Anspruch 1, wobei mit Hilfe einer Steuereinrichtung (9), die mit einer oder mehreren Lichtquellen (5) zum Bereitstellen des Lichts erster und des Lichts zweiter Wellenlänge sowie der Projektionseinrichtung (7) verbunden ist, bestimmt wird, ob das erste oder das zweite Schichtteilvolumen bestrahlt werden, und die Projektionseinrichtung (7) in Abhängigkeit hiervon angesteuert wird, das Licht zweiter Wellenlänge in das erste oder das zweite Schichtteilvolumen zu projizieren.

**3.** Verfahren nach Anspruch 1 oder 2, wobei das Licht erster Wellenlänge und das Licht zweiter Wellenlänge zumindest für einen zeitlichen Überlappungszeitraum gleichzeitig gemeinsam in das erste oder das zweite Schichtteilvolumen eingestrahlt werden.

**4.** Verfahren nach mindestens einem der vorangehenden Ansprüche, wobei das erste und das zweite Schichtteilvolumen in dem Arbeitsvolumen (2) benachbarte Schichtteilvolumen des Ausgangsmaterials (3) bilden.

**5.** Verfahren nach Anspruch 4, wobei das erste und das zweite Schichtteilvolumen einer der folgenden Konfigurationen von Teilvolumen entsprechend gebildet werden: randseitig überlappend, randseitig aneinanderstoßend und randseitig beabstandet zueinander.

**6.** Verfahren nach mindestens einem der vorangehenden Ansprüche, wobei auf das Ausgangsmaterial (3) im Arbeitsvolumen (2) das Licht erster Wellenlänge entlang einer ersten Einstrahlrichtung und das Licht zweiter Wellenlänge entlang einer zweiten Einstrahlrichtung eingestrahlt werden, die quer zur ersten Einstrahlrichtung verläuft.

**7.** Verfahren nach mindestens einem der vorangehenden Ansprüche, wobei das Licht erster Wellenlänge und / oder das Licht zweiter Wellenlänge als gepulstes Licht eingestrahlt werden.

**8.** Verfahren nach mindestens einem der vorangehenden Ansprüche, wobei das Ausgangsmaterial (3) mittels dem optischen Bearbeiten entsprechend wenigstens eines Bearbeitungsverfahrens aus der folgenden Gruppe bearbeitet wird: Aushärten, Härten, Gelieren und Verflüssigen.

**9.** Verfahren nach mindestens einem der vorangehenden Ansprüche, wobei zum Bestrahlen des ersten Schichtteilvolumens und zum Bestrahlen des zweiten Schichtteilvolumens mit dem Licht erster Wellenlänge ein schichtförmiger Einstrahlbereich einer ersten Lichtquelle, mit der das Licht erster Wellenlänge bereitgestellt wird, relativ zum mit dem Ausgangsmaterial (3) ausgefüllten Arbeitsvolumen (2) verlagert wird.

**10.** Verfahren nach mindestens einem der vorangehenden Ansprüche, wobei das optische Bearbeiten des Ausgangsmaterials (3) mit Hilfe eines Lichtdetektors (8a; 8b) beobachtet wird.

**11.** Verfahren nach mindestens einem der vorangehenden Ansprüche, wobei mittels des optischen Bearbeitens in dem Ausgangsmaterial (3) eine polychrome Mehrphotonen-Polymerisation ausgelöst wird, welche die Veränderung der wenigstens einen Materialeigenschaft des Ausgangsmaterials (3) bewirkt.

**12.** Verfahren nach mindestens einem der vorangehenden Ansprüche, wobei das Licht erster Wellenlänge zunächst in dem ersten Schichtteilvolumen und dann in dem zweiten Schichtteilvolumen mit einer in Bezug auf mindestens einen der folgenden Lichtparameter im Wesentlichen homogenen Verteilung eingestrahlt wird: Lichtintensität und Lichtfarbe.

**13.** Verfahren nach mindestens einem der vorangehenden Ansprüche, wobei das Licht zweiter Wellenlänge zunächst auf das erste Schichtteilvolumen und dann auf das zweite Schichtteilvolumen mit einer in Bezug auf mindestens einen der folgenden Lichtparameter nicht-homogenen Verteilung projiziert wird: Lichtintensität und Lichtfarbe.

**14.** Verfahren nach mindestens einem der vorangehenden Ansprüche, wobei beim Bestrahlen des ersten Schichtteilvolumens und / oder beim Bestrahlen des zweiten Schichtteilvolumens mit dem Licht erster Wellenlänge ein Schichtteilvolumen mit einer Schichtdicke von höchstens etwa 1 mm bestrahlt wird.

**15.** Vorrichtung zum Bearbeiten eines optisch reaktiven Materials, mit:

- einem Arbeitsvolumen (2), welches in einem Aufnahmegefäß (1) angeordnet ist und eingerichtet ist, ein Ausgangsmaterial (3) aufzunehmen, welches optisch reaktiv ist und das Arbeitsvolumen (2) ausfüllt;
- einer Beleuchtungseinrichtung, die eingerichtet ist, Licht einer ersten Wellenlänge und Licht einer zweiten Wellenlänge zum Einstrahlen auf das Arbeitsvolumen (2) mit dem Ausgangsmaterial (3) bereitzustellen,
- mehreren Lichtgeneratoren für die Erzeugung eines Lichtschnitts, die eingerichtet sind, das Licht erster Wellenlänge von unterschiedlichen Seiten des Aufnahmegefäßes (1) in das Arbeitsvolumen (2) einzustrahlen und mittels Überlagerung von Teilstrahlen den Lichtschnitt (31) zu generieren, in welchen die Projektion (33) erfolgt; und
- einer Projektionseinrichtung (7), die eingerichtet ist, das Licht zweiter Wellenlänge beim Einstrahlen auf das mit dem Ausgangsmaterial (3) ausgefüllten Arbeitsvolumen (2) in ein Schichtteilvolumen des Arbeitsvolumens (2) und nur das Schichtteilvolumen ganz oder teilweise erfassend zu projizieren;
- eine Steuereinrichtung (9), die mit den mehreren Lichtgeneratoren und der Projektionseinrichtung (7) verbunden ist,

wobei die Beleuchtungseinrichtung und die Projektionseinrichtung (7) weiterhin eingerichtet sind, das Ausgangsmaterial (3) in dem Arbeitsvolumen (2) wie folgt optisch zu bearbeiten, wobei die Projektionseinrichtung (7) von der Steuereinrichtung (9) gesteuert wird:

- Bestrahlen eines ersten Schichtteilvolumens des mit dem Ausgangsmaterial (3) ausgefüllten Arbeitsvolumens (2) mit dem Licht erster Wellenlänge mittels der mehreren Lichtgeneratoren;
- Bestrahlen des ersten Schichtteilvolumens des Arbeitsvolumens (2) mit dem Licht zweiter Wellenlänge, wobei das Licht zweiter Wellenlänge hierbei mittels der Projektionseinrichtung (7) nur das erste Schichtteilvolumen ganz oder teilweise erfassend in das Arbeitsvolumen (2) projiziert wird
- Bestrahlen eines zweiten Schichtteilvolumens des mit dem Ausgangsmaterial (3) ausgefüllten Arbeitsvolumens (2), welches von dem ersten Schichtteilvolumen verschieden ist, mit dem Licht erster Wellenlänge;
- Bestrahlen des zweiten Schichtteilvolumens des Arbeitsvolumens (2) mit dem Licht zweiter Wellenlänge, wobei das Licht zweiter Wellenlänge hierbei mittels der Projektionseinrichtung (7) nur das zweite Schichtteilvolumen ganz oder teilweise erfassend in das Arbeitsvolumen (2) projiziert wird; und
- Wiederholen der vorangehenden Schritte zur schichtweisen optischen Bearbeitung des Ausgangsmaterials (3) in dem Arbeitsvolumen (2) bis ein zu bearbeitendes Volumen des Ausgangsmaterials (3), welches das Arbeitsvolumen (2) ganz oder teilweise erfasst, optisch bearbeitet ist.

## Claims

**1.** Method for processing an optically reactive material, with:

- Providing a starting material (3) that is optically reactive and fills in a working volume (2) arranged in a receiving vessel (1); and
- optical processing of the source material (3) in the working volume (2) by irradiating light of a first wavelength and light of a second wavelength differing from the first wavelength, wherein the light first wavelength and the light second wavelength are provided by an illumination device and by means of optical processing at least one material property of the starting material is changed and the optical processing comprises the following:

  - Irradiate a first layer part volume of the working volume (2) filled with the starting material (3) with the light of the first wavelength;
  - Irradiate the first layer part volume of the working volume (2) with the light second wavelength, wherein the light second wavelength is projected only the first layer part volume in whole or in part into the working volume (2) by means of a projection device (7);
  - Irradiate a second layer part volume of the working volume (2) filled with the starting material (3), which is different from the first layer volume, with the light of the first wavelength;
  - Irradiating the second layer part volume of the working volume (2) with the light second wavelength,

wherein the light second wavelength is projected only the second layer volume in whole or in part into the working volume (2) by means of the projection device (7); and

- Repeat the preceding steps for layerwise optical processing of the starting material (3) in the working volume (2) up to a volume of the starting material (3) to be processed, which captures the working volume (2) in whole or in part, is optically processed,

**characterised in that** the light first wavelength is irradiated by means of several light generators for the generation of a light section, which radiate from different sides of the receiving vessel (1) into the working volume (2) and generate by superimposing partial beams the light section (31) in which the projection (33) takes place.

**2.** Method of claim 1, wherein with the help of a control device (9), which is connected to one or more light sources (5) for providing the light first and the light second wavelength and the projection device (7), is determined whether the first or the second layer part volume are irradiated, and the projection device (7) is controlled depending on this to project the light second wavelength into the first or the second layer part volume.

**3.** Method of claim 1 or 2, wherein the light first wavelength and the light second wavelength at least for a temporal overlap period are simultaneously irradiated into the first or second layer part volume simultaneously.

**4.** Method according to at least one of the preceding claims, wherein the first and the second layer part volume in the working volume (2) form adjacent layer volume of the starting material (3).

**5.** Method of claim 4, wherein the first and second layer volume are formed according to one of the following configurations of partial volume: overlapping on the edge side, colliding with each other on the edge side and spaced apart from each other.

**6.** Method according to at least one of the preceding claims, wherein on the starting material (3) in working volume (2) the light first wavelength along a first beam direction and the light second wavelength along a second inlet direction are irradiated, which runs transversely to the first beam direction.

**7.** Method according to at least one of the preceding claims, wherein the light first wavelength and/or the light second wavelength are irradiated as pulsed light.

**8.** Method according to at least one of the preceding claims, wherein the starting material (3) is processed by means of optical processing according to at least one processing method from the following group: Curing, hardening, gelling and liquefaction.

**9.** Method according to at least one of the preceding claims, wherein for irradiating the first layer part volume and for irradiating the second layer part volume with the light first wavelength, a layer-shaped inlet region of a first light source with which the light first wavelength is provided is shifted relative to the working volume filled with the starting material (3).

**10.** Method according to at least one of the preceding claims, wherein the optical processing of the starting material (3) by means of a light detector (8a); 8b) is observed.

**11.** Method according to at least one of the preceding claims, wherein by means of optical processing in the starting material (3) a polychrome multiphoton polymerisation is triggered, which causes the change of at least one material property of the starting material (3).

**12.** Method according to at least one of the preceding claims, wherein the light first wavelength is first irradiated in the first layer part volume and then in the second layer part volume with a substantially homogeneous distribution with respect to at least one of the following light parameters: Light intensity and light color.

**13.** Method according to at least one of the preceding claims, wherein the light second wavelength is projected first to the first layer part volume and then to the second layer part volume with a non-homogeneous distribution in relation to at least one of the following light parameters: Light intensity and light color.

**14.** Method according to at least one of the preceding claims, wherein when irradiating the first layer part volume and/or when irradiating the second layer part volume with the light first wavelength, a layer part volume with a layer thickness

of at most about 1 mm is irradiated.

**15.** Apparatus for processing an optically reactive material, with:

- a working volume (2) which is arranged in a receiving vessel (1) and is set up to receive a starting material (3), which is optically reactive and fills the working volume (2);
- an illumination device designed to provide light of a first wavelength and light of a second wavelength for irradiating to the working volume (2) with the starting material (3);
- several light generators for the generation of a light section, which are equipped to emit the light first wavelength from different sides of the receiving vessel (1) into the working volume (2) and to generate the light section (31) in which the projection (33) takes place by means of overlay of partial beams; and
- a projection device (7) which is designed to project the second wavelength light when irradiating to the working volume (2) filled with the starting material (3) into a layer part volume of the working volume (2) and only the layer part volume fully or partially capturing;
- a control device (9) connected to the multiple light generators and the projection device (7),

wherein the lighting device and the projection device (7) are further equipped to optically process the starting material (3) in the working volume (2), wherein the projection device (7) is controlled by the control device (9):

- irradiate a first layer part volume of the working volume (2) filled with the starting material (3) with the light first wavelength by means of the multiple light generators;
- irradiation of the first layer part volume of the working volume (2) with the light second wavelength, wherein the light second wavelength is projected by means of a projection device (7) only the first layer part volume in whole or in part into the working volume (2)
- irradiate a second layer part volume of the working volume (2) filled with the starting material (3), which is different from the first layer volume, with the light of the first wavelength;
- irradiate the second layer part volume of the working volume (2) with the light second wavelength, wherein the light second wavelength is projected only the second layer volume in whole or in part into the working volume (2) by means of the projection device (7); and
- repeat the preceding steps for layerwise optical processing of the starting material (3) in the working volume (2) up to a volume of the starting material (3) to be processed, which captures the working volume (2) in whole or in part, is optically processed.

## Revendications

**1.** Procédé de traitement d’un matériau optiquement réactif, avec:

- Fourniture d’un matériau de base (3) qui est optiquement réactif et qui remplit un volume de travail (2) placé dans un récipient de réception (1); et
- traitement optique du matériau de base (3) dans le volume de travail (2) par irradiation de la lumière d’une première longueur d’onde et de la lumière d’une seconde longueur d’onde différente de la première longueur d’onde, la lumière de la première longueur d’onde et la lumière de la seconde longueur d’onde étant fournie par un dispositif d’éclairage et l’usinage optique modifie au moins une caractéristique matérielle du matériau de base et l’usinage optique comprend:

    - L’irradiation d’une première partie de la couche du volume de travail (2) rempli avec la première longueur d’onde (2);
    - L’irradiation de la première partie du volume de travail (2) à la lumière de la seconde longueur d’onde, la lumière de la seconde longueur d’onde étant projetée dans le volume de travail (2) au moyen d’un dispositif de projection (7);
    - Irradier à l’aide de la première longueur d’onde un second volume de partie de couche du volume de travail rempli de la matière de départ (3) (2), différent du volume de la première partie de la couche;
    - L’irradiation de la seconde partie du volume de travail (2) à la lumière de la seconde longueur d’onde, la lumière de la seconde longueur d’onde étant projetée dans le volume de travail (2) à l’aide de l’appareil de projection (7); et
    - Répéter les étapes précédentes pour le traitement optique par couche du matériau de base (3) dans le volume de travail (2) jusqu’à un volume de travail (3) à traiter (3), qui couvre tout ou partie du volume de

travail (2),

**caractérisé en ce que** la lumière de première longueur d'onde est irradiée au moyen de plusieurs générateurs de lumière pour la production d'une coupe lumineuse, qui, de différents côtés du récipient d'enregistrement (1), pénètre dans le volume de travail (2) et génère, par superposition de faisceaux partiels, la section lumineuse (31) dans laquelle la projection a lieu (33).

**2.** Procédé selon la revendication 1, dans lequel, à l'aide d'un dispositif de commande (9) relié à une ou plusieurs sources lumineuses (5) pour fournir la lumière première et la lumière de deuxième longueur d'onde, ainsi que le dispositif de projection (7), est déterminé si le volume de la première ou de la deuxième partie de la couche est irradié et le dispositif de projection (7) est commandé en fonction de la projection de la lumière de deuxième longueur d'onde dans la première ou la deuxième volume de partie de couche.

**3.** Procédé selon la revendication 1 ou 2, dans lequel la lumière de la première longueur d'onde et la lumière de la seconde longueur d'onde sont simultanément irradiées simultanément dans la première ou la deuxième partie de la couche au moins pendant une période de chevauchement temporelle.

**4.** Procédé selon au moins l'une des revendications précédentes, dans lequel les volumes de première et de deuxième partie de la couche dans le volume de travail (2) constituent des volumes adjacents de la matière première (3).

**5.** Procédé selon la revendication 4, dans lequel les premier et deuxième volumes de pièces de couche sont formés selon l'une des configurations suivantes de volume partiel: se chevauchant sur le bord, se heurtant côte à côte et éloigné l'un de l'autre sur le bord.

**6.** Procédé selon au moins l'une des revendications précédentes, dans lequel la matière de départ (3) dans le volume de travail (2) est éclairée par la lumière de la première longueur d'onde le long d'une première direction d'injection et la lumière de la seconde longueur d'onde le long d'un second sens d'injection qui traverse le premier sens d'injection.

**7.** Procédé selon au moins l'une des revendications précédentes, dans lequel la lumière de la première longueur d'onde et/ou la lumière de la seconde longueur d'onde sont éclairées sous forme de lumière pulsée.

**8.** Procédé selon au moins l'une des revendications précédentes, le matériau de base (3) étant traité au moyen de l'usinage optique selon au moins un procédé d'usinage du groupe suivant: Durcissement, durcissement, gélification et liquéfaction.

**9.** Procédé selon au moins l'une des revendications précédentes, où, pour l'irradiation de la première partie de la couche et pour l'irradiation de la seconde partie de la couche avec la lumière de la première longueur d'onde, une zone de faisceau en couche d'une première source lumineuse fournissant la première longueur d'onde est déplacée par rapport au volume de travail (2) rempli avec le matériau de départ (3).

**10.** Procédé selon au moins l'une des revendications précédentes, l'usinage optique du matériau de base (3) à l'aide d'un détecteur de lumière (8a); 8b) sont observés.

**11.** Procédé selon au moins l'une des revendications précédentes, dans lequel une polymérisation polychrome multiphotons est déclenchée par l'usinage optique dans le matériau de base (3), ce qui entraîne la modification d'au moins une propriété matérielle du matériau de base (3).

**12.** Procédé selon au moins l'une des revendications précédentes, dans lequel la lumière de première longueur d'onde est exposée d'abord dans le premier volume de partie de la couche, puis dans le second volume de partie de la couche avec une distribution essentiellement homogène par rapport à au moins l'un des paramètres lumineux suivants: Intensité lumineuse et couleur de la lumière.

**13.** Procédé selon au moins l'une des revendications précédentes, où la lumière de la deuxième longueur d'onde est projetée d'abord sur le premier volume de partie de la couche, puis sur le deuxième volume de partie de la couche avec une distribution non homogène par rapport à au moins l'un des paramètres lumineux suivants: Intensité lumineuse et couleur de la lumière.

**14.** Procédé selon au moins l'une des revendications précédentes, dans lequel, lors de l'irradiation de la première partie de la couche et/ou de l'irradiation de la seconde partie de la couche avec la lumière de la première longueur d'onde, un volume de parties de couche d'une épaisseur de couche n'excédant pas 1 mm est irradié.

**15.** Dispositif d'usinage d'un matériau optiquement réactif, comportant:

- d'un volume de travail (2) disposé dans un récipient d'accueil (1) et mis en place pour accueillir un matériau de départ (3) qui est optiquement réactif et qui remplit le volume de travail (2);
- un dispositif d'éclairage conçu pour fournir la lumière d'une première longueur d'onde et la lumière d'une seconde longueur d'onde pour irradier le volume de travail (2) avec le matériau de base (3);
- plusieurs générateurs de lumière pour la production d'une coupe lumineuse, conçus pour irradier la lumière de première longueur d'onde de différents côtés du récipient d'enregistrement (1) dans le volume de travail (2) et pour générer, par superposition de faisceaux partiels, la section lumineuse (31) dans laquelle la projection (33) a lieu; et
- d'un dispositif de projection (7) conçu pour projeter la lumière de seconde longueur d'onde sur le volume de travail rempli de la matière de départ (3) (2) dans un volume de partie postée du volume de travail (2) et ne capter que le volume de la partie postée en tout ou en partie;
- un dispositif de commande (9) relié aux générateurs de lumière multiples et au dispositif de projection (7);

le dispositif d'éclairage et le dispositif de projection (7) continuent à être conçus pour traiter visuellement la matière première (3) dans le volume de travail (2) de la manière suivante, le dispositif de projection (7) étant commandé par le dispositif de commande (9):

- L'irradiation d'une première partie de la couche du volume de travail (2) rempli avec la lumière de la première longueur d'onde au moyen de plusieurs générateurs de lumière;
- Irradiation de la première partie de la couche du volume de travail (2) à la lumière de la seconde longueur d'onde, la lumière de seconde longueur d'onde étant projetée dans le volume de travail (2) à l'aide de celle d' dispositif de projection (7).
- Irradier à l'aide de la première longueur d'onde un second volume de partie de couche du volume de travail rempli de la matière de départ (3) (2), différent du volume de la première partie de la couche;
- L'irradiation de la seconde partie du volume de travail (2) à la lumière de la seconde longueur d'onde, la lumière de la seconde longueur d'onde étant projetée dans le volume de travail (2) à l'aide de l'appareil de projection (7); et
- Répétez les étapes précédentes pour le traitement optique par couche du matériau de base (3) dans le volume de travail (2) jusqu'à un volume de travail (3) à traiter (3), qui couvre tout ou partie du volume de travail (2).

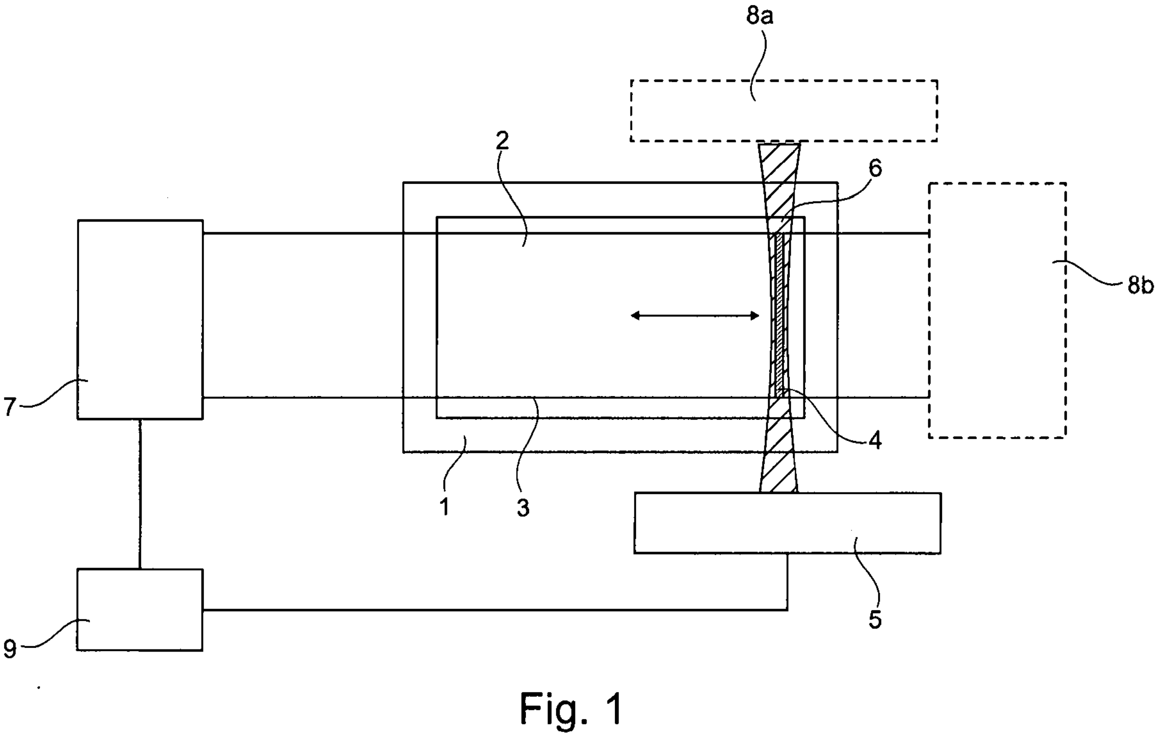


Fig. 1

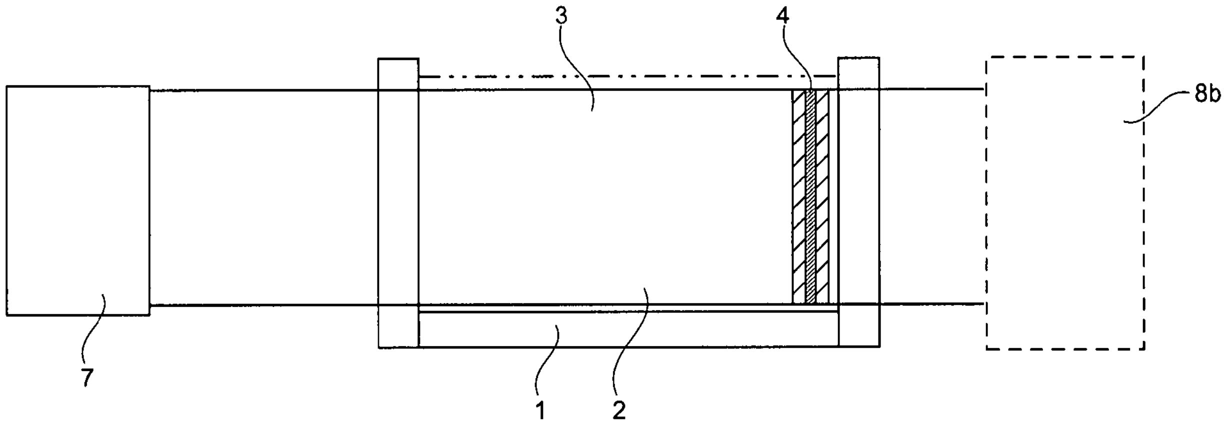


Fig. 2

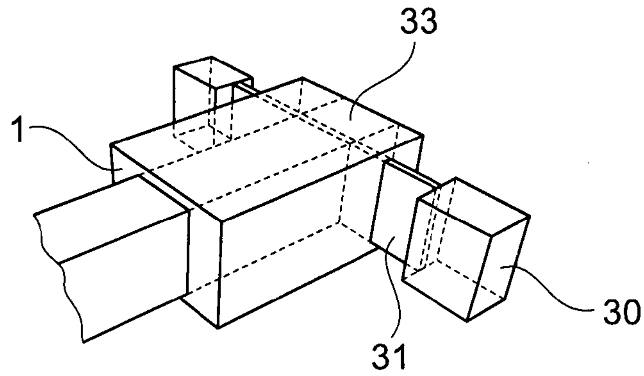


Fig. 3a

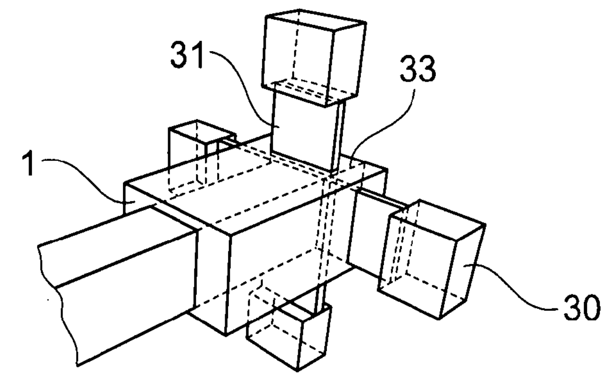


Fig. 3b

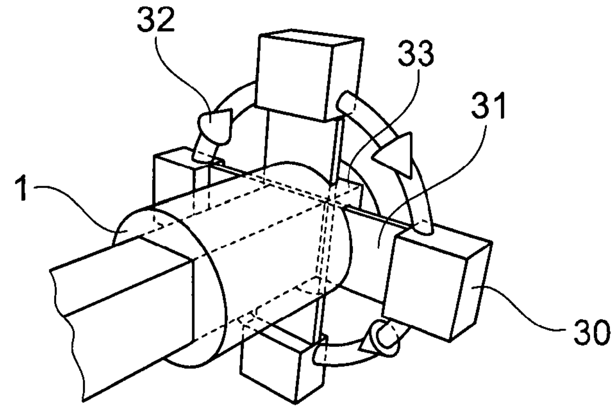


Fig. 3c

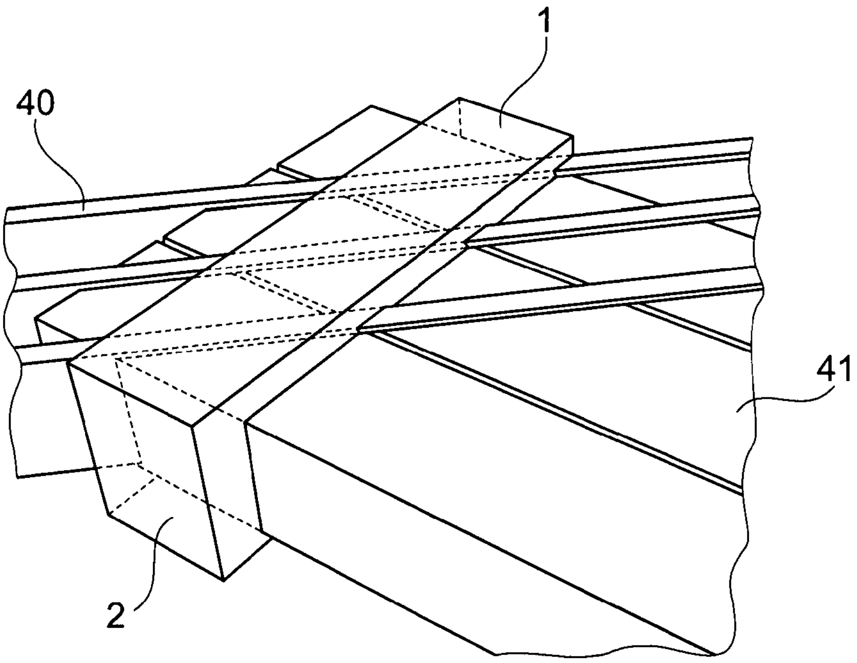


Fig. 4

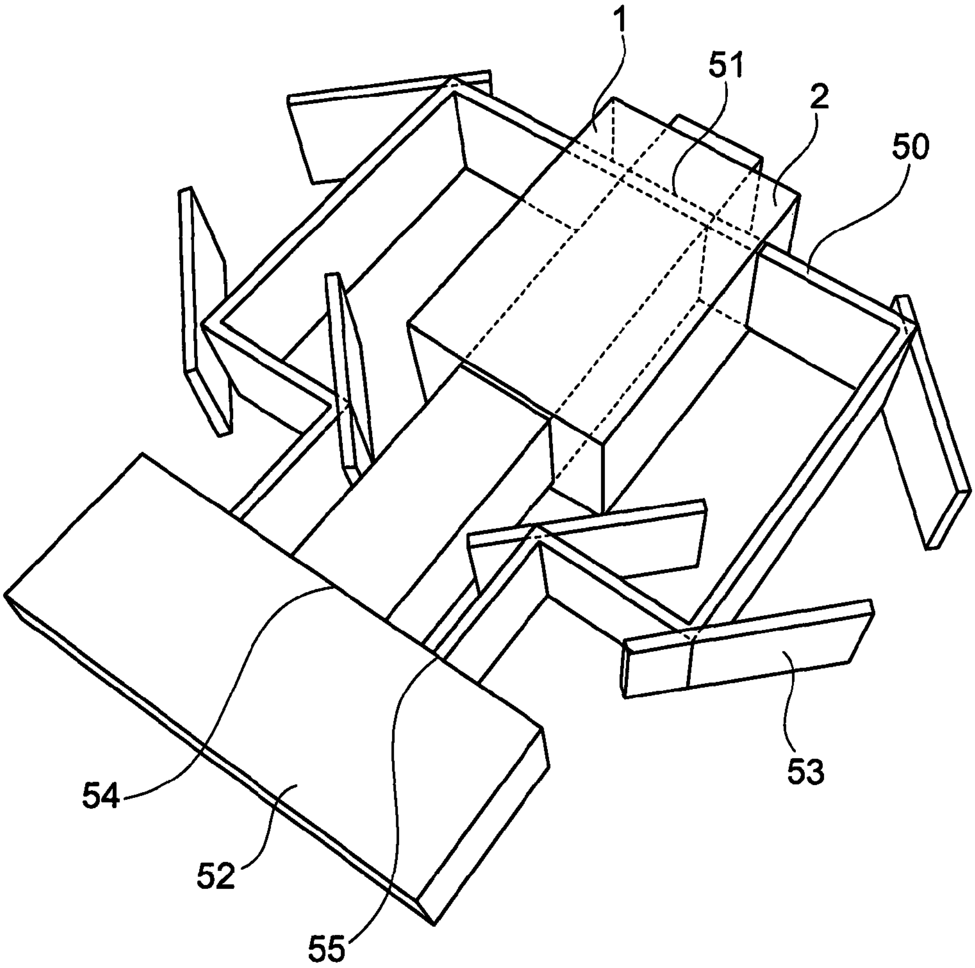


Fig. 5

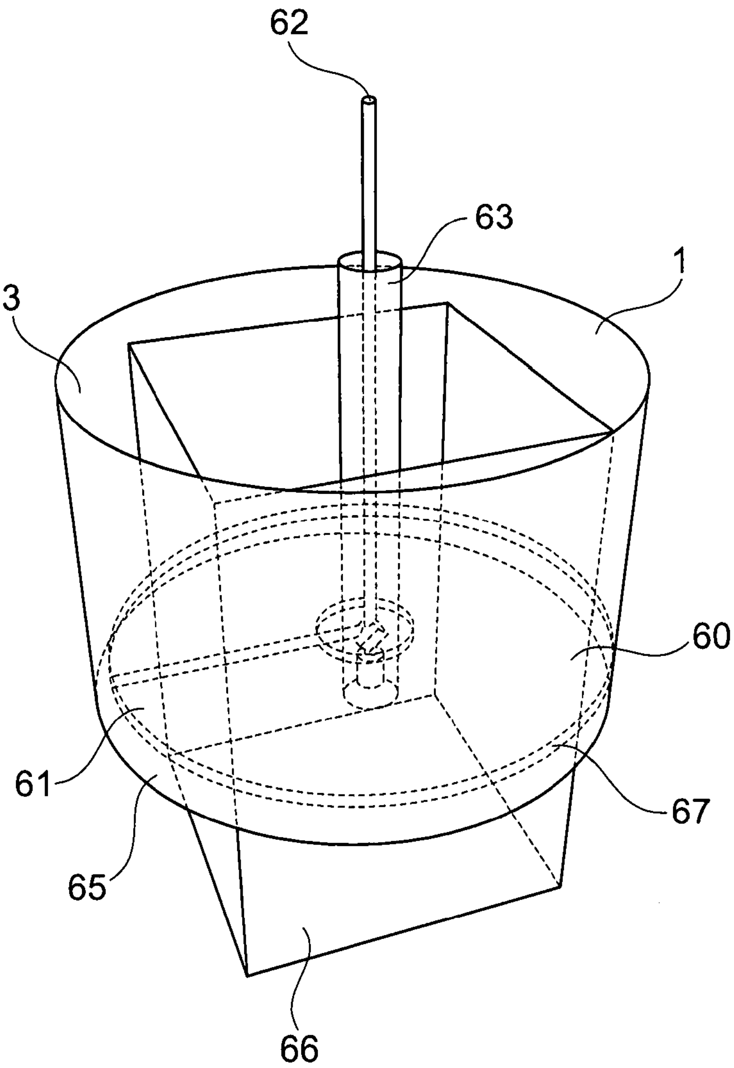


Fig. 6

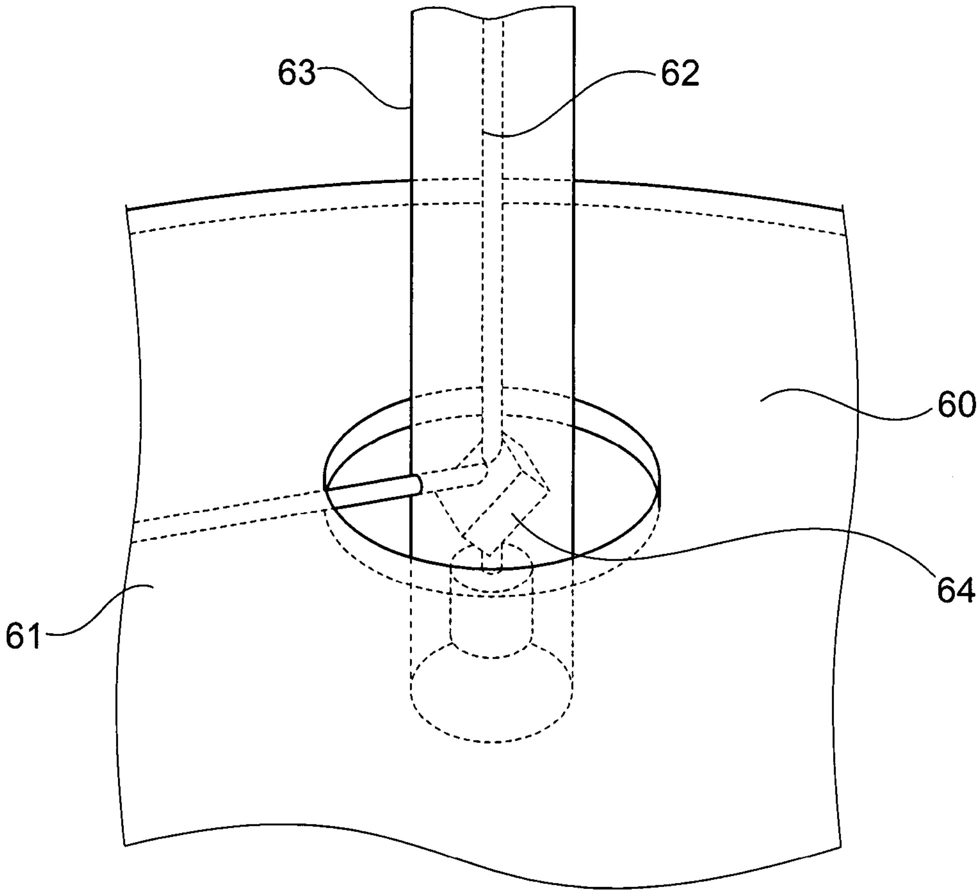


Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4041476 A
- US 20190016052 A1
- US 20190160539 A1
- US 2019160539 A1
- WO 2019194798 A1